(19) Europäisches Patentamt / European Patent Office / Office européen des brevets

(11) **EP 4 350 598 A1**

(12) **DEMANDE DE BREVET EUROPEEN**

(43) Date de publication:
**10.04.2024 Bulletin 2024/15**

(21) Numéro de dépôt: **23201511.5**

(22) Date de dépôt: **04.10.2023**

(51) Classification Internationale des Brevets (IPC):
**G06Q 30/0201** (2023.01)   **G06Q 30/0283** (2023.01)
**G06Q 50/40** (2024.01)

(52) Classification Coopérative des Brevets (CPC):
**G06Q 30/0283; G06Q 30/0201; G06Q 50/40**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **04.10.2022 FR 2210118**

(71) Demandeur: **Evo2Neto**
**92200 Neuilly-Sur-Seine (FR)**

(72) Inventeurs:
• **Lemenne, Laure**
  **29950 Gouesnach (FR)**
• **Lemenne, Régis**
  **29950 Gouesnach (FR)**
• **Hamiche, Jordi**
  **78126 Aulnay sur Mauldre (FR)**

(74) Mandataire: **Derriennic, Tangui Jean**
**InnovaPI**
**64, avenue de Kéradennec**
**29000 Quimper (FR)**

(54) **SYSTÈME D'ESTIMATION D'UN COÛT GLOBAL DE DÉTENTION D'UN VÉHICULE**

(57)     L'invention concerne un système d'estimation d'un coût global de détention d'un véhicule caractérisé en ce qu'il comprend : une pluralité de capteurs opérationnels d'une pluralité de véhicules d'au moins un vendeur potentiel ; un ou plusieurs serveurs d'estimation de coût de véhicule ; recevoir, par l'intermédiaire d'un réseau en provenance d'au moins l'un de la pluralité des capteurs opérationnels de véhicule, des premières données opérationnelles de véhicule ; recevoir, par l'intermédiaire d'un réseau, des deuxièmes données fiscales de véhicule, stocker les premières données opérationnelles de véhicule dans une base de données ; recevoir des informations de l'usage d'un véhicule à estimer le coût, calculer un coût global de détention à partir d'un coût d'usage, d'un coût d'acquisition et d'un coût fiscal.

[Fig. 1]

Fig. 1

EP 4 350 598 A1

**Description**

**Domaine technique de l'invention**

La présente invention concerne un système d'estimation d'un coût global de détention d'un véhicule. Elle s'applique, en particulier, à un système visant à calculer et comparer les coûts de revient et de détention d'un ou plusieurs véhicules achetés ou loués sur une période donnée. En incluant, certains éléments tels que l'usage, la consommation, l'entretien, l'assurance et la fiscalité.

**Technique antérieure**

Le système est une aide à la décision lors de l'acquisition d'un véhicule à destination professionnelle ou privée.
Certains documents de l'art antérieur proposent également des systèmes d'aide à l'acquisition toutefois ils ne prennent pas en compte l'ensemble des paramètres notamment fiscaux.
Certains systèmes se basent sur des données historiques de coûts de détention de véhicules similaires pour estimer les coûts futurs.
D'autres systèmes utilisent des modèles mathématiques simplifiés pour calculer le coût de détention en fonction de quelques paramètres clés, tels que la consommation de carburant et le coût de l'assurance. Le problème de ces systèmes est la mise à jour des bases de données.

**Présentation de l'invention**

La présente invention vise à remédier à ces inconvénients avec une approche totalement novatrice intégrant un ensemble de différents éléments lors d'un choix de véhicule.
Plus précisément, l'invention a pour objectif de fournir une technique d'aide à la décision lors de l'acquisition d'un véhicule à destination des professionnels ou des particuliers.
Ces objectifs, ainsi que d'autres qui apparaîtront par la suite, sont atteints, selon un premier aspect, à l'aide d'un système d'estimation d'un coût global de détention d'un véhicule caractérisé en ce qu'il comprend :

- une pluralité de capteurs opérationnels d'une pluralité de véhicules d'au moins un vendeur potentiel, chacun de la pluralité de capteurs opérationnels des véhicules étant configuré pour enregistrer au moins un paramètre opérationnel dont au moins les éléments suivants : une puissance, une valeur d'émission de $CO_2$, une valeur de consommation d'énergie ; et au moins l'un des éléments suivants : type de transmission, nombre de cylindrée, nombre de portes, une masse, un nombre de chevaux fiscaux ;
- un ou plusieurs serveurs d'estimation de coût d'un véhicule comprenant :

  au moins un processeur, une mémoire stockant des instructions exécutables par ordinateur qui, lorsqu'elles sont exécutées par au moins un processeur matériel, amènent le ou les serveurs d'estimation de coût dudit véhicule à :

    - recevoir, par l'intermédiaire d'un réseau en provenance d'au moins l'un de la pluralité des capteurs opérationnels de véhicule, des premières données opérationnelles dudit véhicule ;
    - recevoir, par l'intermédiaire d'un réseau, des deuxièmes données fiscales dudit véhicule, les deuxièmes données fiscales dudit véhicule étant un tarif de grille malus et bonus, une taxe d'utilisation, un tarif catalogue ;
    - stocker les premières données opérationnelles dudit véhicule et un tarif catalogue pour chaque véhicule dans une base de données ;
    - recevoir des informations de l'usage dudit véhicule à estimer le coût, les dites informations de l'usage étant au moins les éléments suivants : tarif en fonction du type de carburant, kilométrage annuel, nombre de jours d'utilisation, choix du pourcentage en roulage électrique ;
    - recevoir des informations d'acquisition dudit véhicule à estimer le coût, les dites informations d'acquisition étant au moins les éléments suivants : le tarif catalogue issu de la base de données, durée de détention, remise obtenue, coût d'immatriculation, tarif batterie, coût d'assurance annuel, coût d'entretien annuel ;
    - calculer un coût d'acquisition lorsque ledit véhicule à estimer le coût est un achat à partir d'au moins les données suivantes : tarif batterie, coût d'immatriculation, durée de détention et tarif catalogue issu de la base de données et lorsque le véhicule à estimer le coût est un financement à partir d'au moins les données suivantes : tarif du premier loyer, tarif du loyer mensuel, durée du contrat, coût d'immatriculation, durée de détention ;

- calculer un coût d'usage dudit véhicule à estimer le coût, ledit coût d'usage est calculé à partir d'au moins les données suivantes : tarif carburant en fonction du type de carburant, kilométrage annuel, coût d'assurance annuel et du coût d'entretien annuel ;
- calculer un coût fiscal dudit véhicule à estimer le coût, le coût fiscal étant calculé à partir des deuxièmes données fiscales de véhicule et de la durée de détention ;
- calculer et afficher un coût global de détention à partir du coût d'usage, du coût d'acquisition et du coût fiscal ;

le processeur matériel, amène en outre le ou les serveurs d'estimation de coût dudit véhicule à recevoir, par l'intermédiaire de la base de données une image numérique dudit véhicule et configuré pour afficher ladite image numérique en lien avec les calculs de coût global de détention à partir du coût d'usage, du coût d'acquisition et du coût fiscal.

Les éléments associés sont par exemple aussi : marque, modèle, version, finition, énergie, masse, consommation moyenne, émissions de CO2, tarif catalogue.

Selon un exemple, le calcul du coût d'usage peut comprendre la consommation moyenne du véhicule (issue de la base de données véhicules). En cas de motorisation combinant électricité et autre énergies, calcul de la consommation selon l'usage du client (% de roulage en tout électrique vs % de roulage dans l'autre énergie)
La puissance moteur est donnée quelque que soit le type de motorisation.

La puissance du moteur est donnée en kilowatts (kW), un cheval DIN étant équivalent à 0,736 kW (acronyme de Deutsches Institut Für Normung pour Institut allemand de normalisation). Le cheval DIN représente la puissance maximale réelle du moteur d'un véhicule exprimée en kilowatts.

La formule est la suivante : Pa = (CO2/45) + (P/40)^1,6. Pa = puissance administrative.

Formule de calcul pour la valeur des émissions de CO2 d'un véhicule

Type de carburant : Rejet de CO2
Essence : 2280g pour Un litre
Diesel : 2670g pour Un litre
GPL : 1660g pour Un litre
Electricité : 0g pour Un litre

Pour obtenir la consommation d'un véhicule, il faut multiplier la consommation du véhicule par le nombre de grammes au litre soit par exemple:
5 litres/100km émet 5x2280/100 = 114g de CO2/km (Pour un moteur essence)

Pour calculer la valeur de consommation moyenne d'énergie, il est possible d'utiliser la formule de calcul du protocole WLTP (acronyme de World Wide Light Vehicles Test Procédure pour Procédure d'essai mondiale des véhicules légers).

Le véhicule est placé sur bancs à rouleaux dans un laboratoire, puis est soumis à différents cycles censés reproduire des conditions de conduite réelles.

Le parcours virtuel dure 30 minutes et s'étend sur 23,25 km suivant ces principes :

46,5 km/h de vitesse moyenne
131 km/h de vitesse maximale
Température extérieure de 14 °C au départ puis 23 °C
52 % de parcours urbain et 48 % d'extra-urbain (autoroutes)

La moyenne du circuit urbain et extra-urbain correspond au « cycle mixte », souvent communiqué par les constructeurs automobiles. L'ensemble du test est globalement favorable à la sobriété : la vitesse moyenne est relativement faible et le trajet ne comprend aucun relief. L'autonomie obtenue est bien conforme à la réalité, mais correspond à un type de trajet et à un comportement de conduite très spécifiques.

Selon une variante : la puissance administrative (en chevaux fiscaux) = (Cylindrée en cm$^3$ x Taux de puissance) /45

Le "Taux de puissance" dépend du type de carburant utilisé :

Pour l'essence : 1
Pour le diesel : 1,4
Pour le GPL : 0,8

Le calcul donne la puissance administrative en chevaux fiscaux (CV) qu'il est possible de convertir en kW comme décrit ci-avant.

Le calcul du coût d'usage peut aussi contenir la consommation moyenne du véhicule (issue de la base de données véhicules). En cas de motorisation combinant électricité et autre énergies, calcul de la consommation selon l'usage du client (% de roulage en tout électrique vs % de roulage dans l'autre énergie).

Grâce à ces dispositions, le système permet le calcul du coût global de détention (coût de revient et de détention) d'un véhicule sur une période donnée, en fonction de ses données techniques constructeurs, du mode d'acquisition du véhicule et de son usage (loi de roulage, trajets, kilométrage prévu). Cela permet une évaluation complète et précise du coût global de détention, prenant en compte des facteurs techniques, environnementaux et économiques.

Grâce aux données variées collectées, le système peut générer des estimations personnalisées en fonction des besoins et des préférences individuelles des acheteurs potentiels. Par exemple, il peut calculer les coûts de détention en fonction de l'utilisation prévue du véhicule, des préférences de transmission, du nombre de portes, et selon le mode d'acquisition, véhicule financé ou acheté, etc.

Les données collectées par les capteurs permettent au système d'effectuer une analyse approfondie de chaque véhicule. En comparant et en contrastant les différents paramètres, le système peut fournir une évaluation plus précise du coût global de détention, en prenant en compte des caractéristiques spécifiques qui influencent les coûts d'exploitation et d'entretien.

En s'appuyant sur des données tangibles collectées par les capteurs, le système fournit une évaluation objective du coût global de détention. Cela aide les acheteurs à prendre des décisions éclairées en se basant sur des faits concrets plutôt que sur des suppositions subjectives.

Cette efficacité résulte de la capacité du processeur à traiter rapidement les données, à les convertir et à les acheminer vers les serveurs d'estimation. En outre, la gestion automatisée de ce processus garantit une transmission fluide et rapide des informations, ce qui facilite l'analyse précise des coûts de véhicule. Ainsi, l'utilisation du processeur matériel optimise la communication entre la base de données et les serveurs, contribuant ainsi à des estimations plus rapides et plus fiables des coûts de véhicule.

Le système permet aux entreprises et professionnels d'avoir connaissance des éléments de fiscalité liés à l'acquisition d'un véhicule et ayant un impact sur les exercices comptables.

Le système permet la comparaison des coûts de détention entre plusieurs véhicules sur une période donnée, et la comparaison de divers modes d'acquisition et des conséquences en termes de consommation énergétique

L'enjeu consiste à fournir un outil aux professionnels comme aux particuliers permettant de comparer et de prendre la meilleure décision, en fonction de leurs propres cas de figure.

L'invention est avantageusement mise en oeuvre selon les modes de réalisation et les variantes exposées ci-après, lesquelles sont à considérer individuellement ou selon toute combinaison techniquement opérante.

Dans un mode de réalisation, le coût global de détention est soit annuel, mensuel, soit au 100km.

Dans un mode de réalisation, le coût de d'immatriculation à partir d'un calcul d'une puissance fiscale à partir de la valeur émissions de $CO_2$ et en outre d'une puissance moteur maximale en kw issus des données opérationnelles de chaque véhicule, la puissance fiscalité associée à chaque véhicule est en fonction d'un département d'immatriculation et est une donnée ajoutée à la réception des informations de l'usage dudit véhicule à estimer le coût.

Dans un mode de réalisation, les données opérationnelles dudit véhicule le tarif catalogue sont stockés en temps réel ou en temps différé.

Si les données sont stockées en temps réel, cela signifie que les tarifs catalogues peuvent être actualisés instantanément à mesure que de nouvelles informations deviennent disponibles. Cela permet aux utilisateurs d'accéder aux tarifs les plus récents pour les véhicules, ce qui peut être particulièrement utile dans les secteurs où les prix sont sujets à des fluctuations fréquentes.

Si les données sont stockées en temps différé, cela signifie que les tarifs catalogues sont régulièrement à jour de façon mensuelle ou hebdomadaire.

Dans un mode de réalisation, le résultat d'un coût d'immatriculation est une multiplication de la puissance fiscale avec une valeur d'un tarif issu d'une base de données externe, ledit tarif est lié à la location géographique d'estimation du véhicule.

**Brève description des figures**

D'autres avantages, buts et caractéristiques de la présente invention ressortent de la description qui suit faite, dans un but explicatif et nullement limitatif, en regard des dessins annexés, dans lesquels :

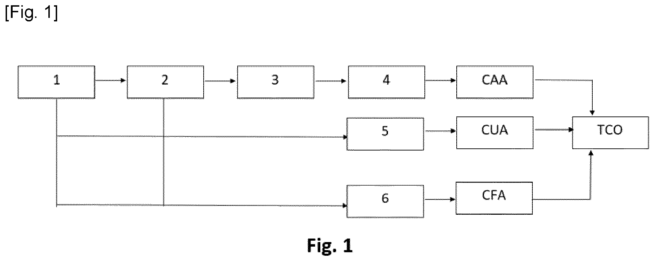

La figure 1 représente un schéma du système objet de la présente invention.

**Description des modes de réalisation**

La figure 1 montre un schéma du système d'estimation d'un coût global de détention d'un véhicule.

Le bloc n°1 correspond à la récupération des données d'usage.

Dans ce bloc, il s'agit de récupérer différentes informations sur l'usage du véhicule et ses caractéristiques techniques.

Pour se faire, le système comporte une pluralité de capteurs opérationnels d'une pluralité de véhicules d'au moins un vendeur potentiel, chacun de la pluralité de capteurs opérationnels de véhicule est configuré pour enregistrer au moins un paramètre opérationnel d'un véhicule dont au moins les éléments suivants : une puissance, une valeur d'émission de $CO_2$ E, une valeur de consommation d'énergie C ; et au moins l'un des éléments suivants : type de transmission, nombre de cylindrée, nombre de portes, la masse M, nombre de chevaux fiscaux CV.

Le bloc n°1 comporte un ou plusieurs serveurs d'estimation de coût de véhicule comprenant : au moins un processeur, une mémoire stockant des instructions exécutables par ordinateur qui, lorsqu'elles sont exécutées par au moins un processeur matériel, amènent le ou les serveurs d'estimation de coût de véhicule à :

- recevoir, par l'intermédiaire d'un réseau en provenance d'au moins l'un de la pluralité des capteurs opérationnels de véhicule, des premières données opérationnelles de véhicule ;
- recevoir, par l'intermédiaire d'un réseau, des deuxièmes données fiscales de véhicule, les deuxièmes données fiscales de véhicule étant un tarif de grille malus et bonus en fonction du type de véhicule, une taxe d'utilisation.
- stocker les premières données opérationnelles de véhicule et un tarif catalogue pour chaque véhicule dans une base de données ;
- recevoir des informations de l'usage d'un véhicule à estimer le coût. Les informations de l'usage sont au moins les éléments suivants : tarif en fonction du type de carburant, kilométrage annuel, nombre de jours d'utilisation, choix du pourcentage en roulage électrique.

Selon un exemple, le tarif est issu de la moyenne observée sur un site officiel.

Le bloc n°2 représente le choix du véhicule par l'utilisateur du système. Le bloc n°2 comporte en outre un affichage visuel du modèle sélectionné.

Le bloc n°3 consiste à recevoir des informations d'acquisition d'un véhicule à estimer le coût. Les informations d'acquisition sont au moins les éléments suivants : la puissance, la valeur d'émission de $CO_2$, le type de transmission, l'énergie, la cylindrée, le type de boite de vitesse, le nombre de portes, le tarif catalogue TC issu de la base de données. Selon un exemple il existe aussi les éléments suivants : La masse M, la consommation d'énergie (thermique ou électrique), les chevaux fiscaux.

Selon un autre exemple, les éléments suivants sont aussi identifiés : la durée de détention t, la remise obtenue RS, le coût d'immatriculation avec le département d'immatriculation DI, le tarif batterie TB, le coût d'assurance CAS, le coût d'entretien CE.

Le bloc n°3 représente le calcul du coût d'acquisition. Le système permet de calculer un coût d'acquisition lorsque le véhicule à estimer est un achat à partir d'au moins les données suivantes : tarif batterie TB, coût d'immatriculation, durée de détention t et tarif catalogue TC issu de la base de données et lorsque le véhicule à estimer le coût est un financement à partir d'au moins les données suivantes : tarif du premier loyer L1M, tarif du loyer mensuel LM, durée du contrat tF, coût d'immatriculation.

Selon un exemple, il est d'abord calculé les frais d'immatriculation Fi.

Fi = CV*tarif par cheval fiscal en fonction du département d'immatriculation DI.

En sortie du bloc n°3, la valeur est calculée, il s'agit du coût d'acquisition annuel CAA.

S'il s'agit d'un achat. On calcule une première valeur VR : Valeur résiduelle du véhicule en fin de période de détention.

Selon un exemple la valeur VR est la suivante :

$$VR=$$
$$SI(t>59;TC*0,3;(SI(t>47;TC*0,4;SI(t>35;TC*0,5;SI(t>23;TC*0,6;TC*0,7))))$$

La valeur CAA du coût acquisition annuel en cas d'achat est par exemple :

$$CAA = ((TC-RS-VR+Fi)/t)*12$$

S'il s'agit d'un financement. On calcule le coût acquisition annuel dans le cas d'un financement :

$$CAA=(L1M+Fi+L*tF)/tF)*12)$$

Le bloc n°4 représente le calcul du coût d'usage. Le système permet de calculer un coût d'usage du véhicule à estimer, ledit coût d'usage est calculé à partir d'au moins les données suivantes : tarif carburant Tcarb en fonction du type de carburant, kilométrage annuel, coût d'assurance CAS et du coût d'entretien annuel CE.

S'il s'agit d'un véhicule hydrides, thermiques, et E85 ; le coût du carburant et d'énergie CCE est le suivant :

$$CCE = (KM/100)*C*Tcarb$$

Avec C qui est la valeur de la consommation (lié à l'énergie utilisé).

S'il s'agit d'un véhicule hybride qui se branche pour se recharger, alors le CCE est le suivant :

$$CCE=(KM*\%EV)/100*C*Prix \ du \ KW +(((1-\%EV)*KM)*C1/100)*Tcarb$$

Avec Prix du KW qui le prix du kilowatt selon les données du marché.

Avec EV comme étant un pourcentage de roulage. EV est choisi entre 0%, 25%, 50%, 75% ou 100%.

S'il s'agit d'un véhicule électrique. Le coût du carburant et d'énergie CCE est le suivant :

$$CCE=(KM/100)*C*Prix \ du \ KW.$$

En sortie du bloc n°4, la valeur est calculée, il s'agit du coût d'usage annuel CUA. Le CUA est l'addition du CCE, CAS, et du CE.

$$CUA = CCE+ CAS + CE.$$

Le bloc n°5 représente le calcul du coût de fiscalité. Le système permet de calculer un coût fiscal du véhicule à estimer, le coût fiscal est calculé à partir des deuxièmes données fiscales de véhicule et de la durée de détention.

Selon un exemple, le calcul du malus est le suivant :
Malus=SI(E< 129; 0; SI(E>224; 30000; avec E extrait de la base de données)

Selon une variante qui peut évolue en fonction des lois :
Ce calcul est comprend d'autres conditions :
Si E>225 ; 50000 limité à 50% du prix d'acquisition du véhicule ; avec E extrait de la base de données si > 122.

Il est calculé aussi le coût du malus masse, sauf véhicules électriques et à brancher dont MalusMasse =0€.

MalusMasse=SI(M<= 1800; 0; SI(M>=2500; 7000; avec M issu de la base de données)).

Selon un exemple, il est aussi calculé le bonus :

$$Bonus=SI((TC-RS)>60000;0;SI((TC-RS)<47000;SI((TC-RS)*0,27<4000;-$$
$$(TC-RS)*0,27;- 4000);-2000)).$$

Le calcul du bonus est différent s'il s'agit d'un client professionnel ou d'un client particulier.

Client professionnel : SI(ET((TC-RS)<=47000;M<2400);3000;0)
Client particulier : SI(ET((TC-RS)<=47000;M<2400);5000;0)

De plus, le client dans le revenu fiscal de référence est inférieur à 14089€ bénéficie d'une aide supplémentaire (2000 e de bonus en plus), la solution lui demande dans ce cas là de cocher une case pour la prise en compte de cet avantage.

Le résultat est alors l'addition du résultat de la formule précédente est de 2000 €.

Pour un usage professionnel, il est calculé une première taxe d'utilisation TU1 et une deuxième taxe d'utilisation TU2.

TU1=SI(E<60;0; avec E issu de la base de données).

Selon une variante, le calcul de la taxe d'utilisation 1 est le suivant :

TU1= Recherche de taxes correspondant aux émissions de CO2 dans une base de données sauf en dessous ou égal à 20G - dont la TU =0

TU2=SI(TU1=0-0;SI(Véhicules Diesel=40;Véhicules Essence =20)

En sortie du bloc n°5, la valeur est calculée, il s'agit du coût d'impact de la fiscalité annuel : FISCA.

$$FISCA = ((Malus+MalusMasse+TU1+TU2)*(t/12))/(t/12),$$

Avec selon une variante la prise en compte des bonus.

Ensuite, le système calcule le coût global de détention TCO à partir du coût d'usage, du coût d'acquisition et du coût fiscal.

$$TCO = CAA+CUA+FISCA$$

Selon un exemple, la valeur est donnée de façon annuelle, mensuelle soit TCOA/12 ou rapportée aux 100km, soit (TCOA/KM)*100

Pour obtenir les résultats escomptés, le système fonctionne grâce à l'intégration tous les trois mois d'une base de données techniques de tous les véhicules commercialisés en France.

Elle fonctionne également grâce à des formules complexes permettant de calculer de manière automatisée la fiscalité et le coût de la consommation par véhicule en fonction des données constructeurs et des informations renseignées par l'utilisateur sur l'usage prévu.

Selon un exemple, le système est utilisé par tout conseiller commercial proposant des véhicules à des clients particuliers, professions libérales, ou professionnels et entreprises. Avec le système, le conseiller commercial conseille tout client - au plus près de son usage et de son cas qui lui est propre.

Le système permet de guider et accompagner le client dans le choix d'une technologie (ex : électrique ou hybride ou thermique), ou d'un mode d'acquisition (achat, financement) en évaluant l'impact des choix réalisés sur le coût global de détention sur une période donnée (dont la fiscalité liée au véhicule).

**LISTE DES SIGNES DE RÉFÉRENCE**

[Table 1]

| Références | Désignations |
|---|---|
| 1 | données d'usage |
| 2 | données véhicule |
| 3 | données d'acquisition et d'usage |
| 4 | calcul du coût d'acquisition |
| 5 | calcul du coût d'usage |
| 6 | calcul fiscalité |
| CAA | coût d'acquisition annuel |
| CUA | coût d'usage annuel |
| CFA | coût d'impact de la fiscalité annuel |
| TCO | coût global de détention |
| E | valeur d'émission de $CO_2$ |

(suite)

| Références | Désignations |
|---|---|
| C | valeur de consommation d'énergie |
| M | masse |
| CV | nombre de chevaux fiscaux |
| TC | tarif catalogue |
| t | durée de détention |
| RS | remise obtenue |
| TB | tarif batterie |
| CAS | coût d'assurance annuel |
| CE | coût d'entretien annuel |
| L1M | tarif du premier loyer |
| L | tarif du loyer mensuel |
| tF | durée du contrat |
| KM | kilométrage annuel |
| Tcarb | tarif carburant |

**Revendications**

1.  Système d'estimation d'un coût global de détention d'un véhicule **caractérisé en ce qu'**il comprend :

- une pluralité de capteurs opérationnels d'une pluralité de véhicules d'au moins un vendeur potentiel, chacun de la pluralité de capteurs opérationnels des véhicules étant configuré pour enregistrer au moins un paramètre opérationnel dont au moins les éléments suivants : une puissance, une valeur d'émission de $CO_2$ (E), une valeur de consommation d'énergie (C) ; et au moins l'un des éléments suivants : type de transmission, nombre de cylindrée, nombre de portes, une masse (M), un nombre de chevaux fiscaux (CV) ;
- un ou plusieurs serveurs d'estimation de coût d'un véhicule comprenant : au moins un processeur, une mémoire stockant des instructions exécutables par ordinateur qui, lorsqu'elles sont exécutées par au moins un processeur matériel, amènent le ou les serveurs d'estimation de coût dudit véhicule à :

- recevoir, par l'intermédiaire d'un réseau en provenance d'au moins l'un de la pluralité des capteurs opérationnels, des premières données opérationnelles dudit véhicule ;
- recevoir, par l'intermédiaire d'un réseau, des deuxièmes données fiscales dudit véhicule, les deuxièmes données fiscales dudit véhicule étant un tarif de grille malus et bonus, une taxe d'utilisation, un tarif catalogue (TC) ;
- stocker les premières données opérationnelles dudit véhicule et un tarif catalogue (TC) pour chaque véhicule dans une base de données ;
- recevoir des informations de l'usage dudit véhicule à estimer le coût, les dites informations de l'usage étant au moins les éléments suivants : tarif en fonction du type de carburant, kilométrage annuel, nombre de jours d'utilisation, choix du pourcentage en roulage électrique ;
- recevoir des informations d'acquisition dudit véhicule à estimer le coût, les dites informations d'acquisition étant au moins les éléments suivants : le tarif catalogue (TC) issu de la base de données, durée de détention (t), remise obtenue (RS), coût d'immatriculation, tarif batterie (TB), coût d'assurance annuel (CAS), coût d'entretien annuel (CE) ;
- calculer un coût d'acquisition lorsque ledit véhicule à estimer le coût est un achat à partir d'au moins les données suivantes : tarif batterie (TB), coût d'immatriculation, durée de détention (t) et tarif catalogue (TC) issu de la base de données et lorsque le véhicule à estimer le coût est un financement à partir d'au moins les données suivantes : tarif du premier loyer (L1M), tarif du loyer mensuel (L), durée du contrat (tF), coût d'immatriculation, durée de détention (t) ;

- calculer un coût d'usage dudit véhicule à estimer le coût, ledit coût d'usage est calculé à partir d'au moins les données suivantes : tarif carburant (Tcarb) en fonction du type de carburant, kilométrage annuel (KM), coût d'assurance annuel (CAS) et du coût d'entretien annuel (CE) ;
- calculer un coût fiscal dudit véhicule à estimer le coût, le coût fiscal étant calculé à partir des deuxièmes données fiscales de véhicule et de la durée de détention (t) ;
- calculer un coût global de détention à partir du coût d'usage, du coût d'acquisition et du coût fiscal ;

le processeur matériel, amène en outre le ou les serveurs d'estimation de coût dudit véhicule à recevoir, par l'intermédiaire de la base de données une image numérique dudit véhicule, et configuré pour afficher ladite image numérique en lien avec les calculs de coût global de détention à partir du coût d'usage, du coût d'acquisition et du coût fiscal..

2. Système selon la revendication 1, dans lequel le coût global de détention est soit annuel, mensuel, soit au 100km.

3. Système selon la revendication 1, dans lequel le coût de d'immatriculation à partir d'un calcul d'une puissance fiscale (CV) à partir de la valeur émissions de $CO_2$ et en outre d'une puissance moteur maximale en kw issus des données opérationnelles de chaque véhicule, la puissance fiscalité associée à chaque véhicule est en fonction d'un département d'immatriculation et est une donnée ajoutée à la réception des informations de l'usage dudit véhicule à estimer le coût.

4. Système selon la revendication 1, dans lequel les données opérationnelles dudit véhicule le tarif catalogue (TC) sont stockés en temps réel ou en temps différé.

5. Système selon la revendication 3, dans lequel le résultat d'un coût d'immatriculation est une multiplication de la puissance fiscale (CV) avec une valeur d'un tarif issue d'une base de données externe, ledit tarif est lié une location géographique d'estimation du véhicule.

[Fig. 1]

**Fig. 1**

**Europäisches Patentamt**
**European Patent Office**
**Office européen des brevets**

# RAPPORT DE RECHERCHE EUROPEENNE

Numéro de la demande

**EP 23 20 1511**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 10 332 208 B1 (LOO WILLIAM [US] ET AL) 25 juin 2019 (2019-06-25) <br> * abrégé * <br> * colonne 1, lignes 24-62 * <br> * colonne 2, ligne 52 – colonne 3, ligne 48; figure 1 * <br> * colonne 4, ligne 28 – colonne 10, ligne 59; figures 1,2 * <br> * colonne 12, lignes 17-65; figure 3 * <br> * colonne 15, ligne 15 – colonne 16, ligne 35; figure 4 * <br> ----- | 1-5 | INV. <br> G06Q30/0201 <br> G06Q30/0283 <br> G06Q50/40 |
| A | EISENMANN CHRISTINE ET AL: "Some pay much but many don't: Vehicle TCO imputation in travel surveys", <br> TRANSPORTATION RESEARCH PROCEDIA, [Online] vol. 32, 1 janvier 2018 (2018-01-01), pages 421-435, XP093042778, <br> ISSN: 2352-1465, DOI: 10.1016/j.trpro.2018.10.056 <br> Extrait de l'Internet: <br> URL:https://www.sciencedirect.com/science/article/pii/S2352146518302102> <br> [extrait le 2023-04-28] <br> * le document en entier * <br> ----- | 1-5 | |

**DOMAINES TECHNIQUES RECHERCHES (IPC)**

G06Q

Le présent rapport a été établi pour toutes les revendications

| Lieu de la recherche | Date d'achèvement de la recherche | Examinateur |
|---|---|---|
| Munich | 19 février 2024 | Dedek, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 20 1511

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-02-2024

| Document brevet cité au rapport de recherche | Date de publication | Membre(s) de la famille de brevet(s) | Date de publication |
|---|---|---|---|
| US 10332208 B1 | 25-06-2019 | US 10332208 B1<br>US 11080792 B1 | 25-06-2019<br>03-08-2021 |

EPO FORM P0460